Europäisches Patentamt

European Patent Office

Office européen des brevets

(11) Veröffentlichungsnummer: **0 001 606**
A1

(12) **EUROPÄISCHE PATENTANMELDUNG**

(21) Anmeldenummer: **78101101.0**

(22) Anmeldetag: **09.10.78**

(51) Int. Cl.²: **F 16 L 59/16**
**B 29 C 17/03**

(30) Priorität: **17.10.77 AT 7430/77**

(43) Veröffentlichungstag der Anmeldung:
**02.05.79 Patentblatt 79/9**

(84) Benannte Vertragsstaaten:
**BE CH DE FR GB LU NL SE**

(71) Anmelder: **Reist, Armin**
**Friedhofstrasse**
**CH-4573 Lohn(CH)**

(72) Erfinder: **Reist, Armin**
**Friedhofstrasse**
**CH-4573 Lohn(CH)**

(74) Vertreter: **Blum, Rudolf E. et al,**
**c/o E. Blum & Co Patentanwälte Vorderberg 11**
**CH-8044 Zürich(CH)**

(54) **Isolierung für einen Rohrbogen gegen Kälte, Schall und Wärme sowie Verfahren und Vorrichtung zur Herstellung derselben.**

(57) Die Isolierung für einen Rohrbogen gegen Kälte, Schall und Wärme besteht aus zwei einen Isolierkörper (1) bildenden Halbschalen (1a, 1b) und einem Schutzmantel (2), der als eine auf der Aussenseite der zusammengefügten Halbschalen (1a, 1b) anliegende, am inneren Kreisbogen getrennte Folie (2) ausgebildet ist. Der Schutzmantel (2) wird mittels einer Vorrichtung hergestellt, bei der die Folie (11) mit einem verlorenen Modell (13) tiefgezogen wird. Das Modell wird dabei von einem aus zwei Isolierkörpern (1), die an den Stirnseiten miteinander verbunden sind, bestehenden Formstück (13) gebildet.

*Fig. 1*

*Fig. 2*

EP 0 001 606 A1

- 1 -

0001606

Isolierung für einen Rohrbogen gegen Kälte,
Schall und Wärme sowie Verfahren und Vorrichtung zur Herstellung derselben

------------------------------------------------

Die Erfindung bezieht sich auf eine Isolierung für
einen Rohrbogen gegen Kälte, Schall und Wärme bestehend aus
zwei am Rohrbogen anlegbare formgleiche Halbschalen , die
einen rohrförmigen Isolierkörper bilden, und einem die Aussenseite der zusammengefügten Halbschalen abdeckenden Schutzmantel, sowie auf ein Verfahren und eine Vorrichtung zur Herstellung derselben.

Zur Isolation von Rohrleitungen gegen Wärme, Kälte
und Schall wird bekanntlich eine Isolationsschicht um die
Rohrleitung gelegt über die ein Schutzmantel angebracht wird,
um die Schicht gegen Feuchtigkeit und mechanische Beschädigung zu schützen.

Um den Rohrbogen wird eine Schicht aus Isoliermaterial, die aus gewickelten Zöpfen, Stränge, Matten, Wolle oder
Kork besteht, angeordnet. Nachfolgend wird ein Schutzmantel
um die Schicht geschlagen und befestigt, womit die Isolation
erstellt ist.

Es sind verschiedene Ausführungen von Isolierungen
für Rohrbögen bekannt. Einige sind als zweiteilige Formteile
mit oder ohne äusseren Schutzmantel ausgebildet. Formteile
ohne Isoliermantel bestehen aus gepresstem Styropor und weisen den Nachteil auf, dass sie wegen der fehlenden Elastizität beim Anlegen an einen nicht genau installierten Rohrbogen
an einem oder beiden Stirnrändern von Hand nachbearbeitet werden müssen und dabei ausbrechen. Andere Formteile bestehen
aus Hartschäumen, die formgeschäumt oder maschinell bearbeitet sind, z.B. gefräst und die gleichen Nachteile wie Styropor aufweisen.

Aus der Schweizer Patentschrift Nr. 488 139 ist ein
Formstück zur Rohrbogenisolierung bekannt, das einstückig aus-

0001606

gebildet und der Länge nach geschlitzt ist. Da dieses Formstück ohne Schutzmantel verlegt wird, ist es vor mechanischer Beschädigung nicht geschützt und eignet sich somit nur zur Verlegung in Kanälen, Schächte oder allgemein hinter Putz. Daraus folgt ferner, dass zur Herstellung des Formstückes für die jeweilige Krümmerart und -ausführung eine separate Form benötigt wird, was sich nachteilig auf die Herstellungskosten auswirkt.

In der Schweizer Patentschrift Nr. 555 508 ist ein Isolierkörper aus halbstarrem Material, der mit quer zu seiner Achse verlaufenden kerbförmigen Ausschnitten versehen ist, derart, dass er sich zu einem Krümmer zusammenlegen lässt, wobei die Ausschnitte sich von T-förmigen Einschnitten bis in die Ränder erstrecken. Dieser Isolierkörper hat den Nachteil, dass er offene Poren aufweist, in welche Kondenswasser eindringen kann. Ferner kann durch das nicht genaue Anliegen der einzelnen Abschnitte zwischen den keilförmigen Einschnitten das Kondenswasser auch von Innen her den Isolierkörpern durchsetzen und es können Spalten entstehen, welche das Isolationsvermögen der Isolation beträchtlich verringern.

An Rohren, die nicht in Kanälen, Schächte etc. verlegt werden, wird zum Schutz des vorstehend erwähnten Isolierkörpers vor mechanischer Beschädigung ein Schutzmantel benötigt, der in einer separaten Form tiefgezogen und in einem separaten Arbeitsgang unter Verwendung von Hilfsmitteln am jeweiligen Rohrbogen angeordnet und anschliessend endgültig befestigt wird. Dadurch werden die Kosten pro montierten Bogen sehr hoch.

Aus der Schweizer Patentschrift Nr. 564 723 ist eine Rohrbogenisolierung bekannt, die aus zwei formgleichen Hälften besteht. Die Hälften bestehen aus einem Schutzmantel in Form einer Rohrbogenhalbschale und einem Isolierkörper, der in einer eigens dazu hergerichteten Form in der Rohrbogenhalbschale aufgeschäumt wird. Die Isolierkörper werden mittels verschiedener Kerne mit Aussparungen versehen. Die Hälften sind mit Rastverschlüssen versehen, welche durch Aufset-

- 3 -    0001606

zen der Gegenhälften formschlüssig ineinandergreifen und sich durch die Rastverschlüsse unlösbar miteinander in Verbindung bringen lassen.

Diese Rohrbogenisolierungen haben die Nachteile, dass bedingt durch die Ausführung der Rohrbogenhalbschalen teuer in der Herstellung sind, und dass die Rohrbogenisolierung nicht an alle Rohrbogenarten und -ausführungen anlegbar ist, so dass eine erhebliche Anzahl von komplizierten Formwerkzeugen zu deren Herstellung erforderlich ist.

In den folgenden Schriftwerken CH-PS Nr. 453 016, CH-PS Nr. 547 669, DT-OS Nr. 2 353 308, DT-GB Nr. 1 754 657, CH-PS Nr. 564 723 und CH-PS Nr. 542 397 sind Verfahren bzw. Verfahren und Vorrichtungen zur Herstellung eines Schutzmantels offenbart, mit welchen ein einstückiger Schutzmantel hergestellt werden kann. Bei dem Verfahren werden Platten und Folien aus tiefziehfähigem Material, z.B. Kunststoff in einer Form in bekannter Weise tiefgezogen bzw. vakuumverformt. Dazu werden jeweils verschieden ausgebildete Formen verwendet, so dass verschiedene schalenförmige Schutzmäntel entstehen. Diese Schutzmäntel haben jedoch den Nachteil, dass sie nur im aufgebogenem, schalenförmigem Zustand formstabil sind. Diese streben diesen Zustand wieder an, wenn sie in die Form eines geschlossenen Torussektors gebogen werden, was die Montage erschwert. Um einen Schutzmantel in Form eines geschlossenen Torussektors herzustellen, wird gemäss dem in der DT-OS Nr. 2 353 308 offenbarten Verfahren der von Hand geschlossene Torussektor einer zusätzlichen Wärmebehandlung unterworfen oder es wird ein Verriegelungselement vorgesehen. Durch diese zusätzliche Wärmebehandlung an dem Schutzmantel entsteht eine Mehrarbeit, was ein Nachteil ist.

Die Erfindung, wie sie in den Ansprüchen gekennzeichnet ist, löst die Aufgabe, eine Isolierung für einen Rohrbogen sowie ein Verfahren und eine Vorrichtung zur Herstellung der Isolierung zu schaffen, welche die vorstehend genannten Nachteile nicht aufweisen.

Die Vorteile der Erfindung bestehen darin, dass die Isolierung bestehend aus Halbschalen und Schutzmantel als ein universeller an verschiedene Rohrbogenarten und -ausführungen montierbarer Bauteil ausgebildet ist, wobei die Montage einfach und schnell ausführbar ist, dass die Anzahl der Ausführungsarten der Isolierungen, deren Aussendurchmesser allein durch den Aussendurchmesser der Isolierung angrenzenden Rohrleitungen bestimmt ist, bedingt durch die Ausbildung der Ausnehmung, in die alle Bogenarten und -ausführungen aufgenommen werden, sehr stark verringert werden kann, und dass durch das Tiefziehen des Schutzmantels mittels der verlorenen Form die Anzahl der Formwerkzeuge stark reduziert werden kann.

Durch eine Erweiterung des Ausschnittes an den Enden der Halbschale kann die Isolierung für andere Rohrweiten bei geringer Isolationsdicke angewendet werden, wodurch eine weitere beträchtliche Reduktion in der Anzahl der Ausführungen der erfindungsgemässen Isolation erzielt werden kann.

Im folgenden wird die Erfindung anhand der beiliegenden Zeichnungen näher erläutert: Es zeigen:

Fig. 1 eine räumliche Ansicht einer erfindungsgemässen Isolierung,

Fig. 2 eine schematisch dargestellte Vorrichtung zur Erzeugung des Schutzmantels der Isolierung,

Fig. 3 ein schematisch dargestelltes Ausführungsbeispiel einer Form, die in der Vorrichtung und Fig. 2 angewendet wird,

Fig. 4 ein Schnitt entlang der Linie IV-IV in Fig. 3,

Fig. 5 ein schematisch dargestelltes weiteres Ausführungsbeispiel einer Form, die in der Vorrichtung und Fig.2 angewendet wird,

Fig. 6 ein Schnitt entlang der Linie VI-VI in Fig.5,

Fig. 7 eine Draufsicht auf die erfindungsgemässe Halbschale, und

0001606

Fig. 8 eine Seitenansicht der Halbschale von Fig. 7.
Die Fig. la zeigt eine Isolierung für einen Rohrbogen, die
aus einem Isolierkörper 1 und einem Schutzmantel 2 besteht.

Der Isolierkörper 1 besteht aus zwei formgleichen
Halbschalen la,lb, die an den äusseren Stossflächen miteinander
verklebt werden können, so dass ein rohrförmiger Körper entsteht, wobei zwischen den inneren Stossflächen ein Schlitz 3
vorhanden ist. Die Halbschalen werden in einer an sich bekannten Form, in die ein Kern eingelegt ist, aus einer Schaummenge von 30-80 kg/m$^3$ aufgeschäumt. Die Halbschalen können
aus Polyurethan-Integral-Schaumstoff bestehen, die eine allseitig geschlossene Haut aufweisen, welche den Isolierkörper
1 gegen das Eindringen von Feuchtigkeit schützt und ist
elastisch verformbar. Die Halbschalen können auch aus Polyurethan-Hartschaum bestehen, welcher an sich geschlossene Zellen aufweist, so dass das Eindringen von Feuchtigkeit verhindert wird, jedoch nicht elastisch verformbar ist.

Der aus den Halbschalen gebildete Isolierkörper 1
weist eine bestimmte Aussenbogenform auf und hat zwei Stirnseiten 4 mit dem gleichen Aussendurchmesser. Diese Aussenbogenform und die dieser zugeordneten Durchmesser bilden eine
Kenngrösse der Isolierung. Zur Ausbildung des Hohlraumes 5
im Isolierkörper wird bei gleicher Aussenbogenform jeweils
ein Kern (nicht dargestellt) beim Aufschäumen der Halbschalen
verwendet, um verschiedene Rohrbogenarten und -ausführungen
mit verschiedenen Krümmungsradien isolieren zu können. Dadurch wird die Anzahl der Schaumwerkzeuge beträchtlich verringert.

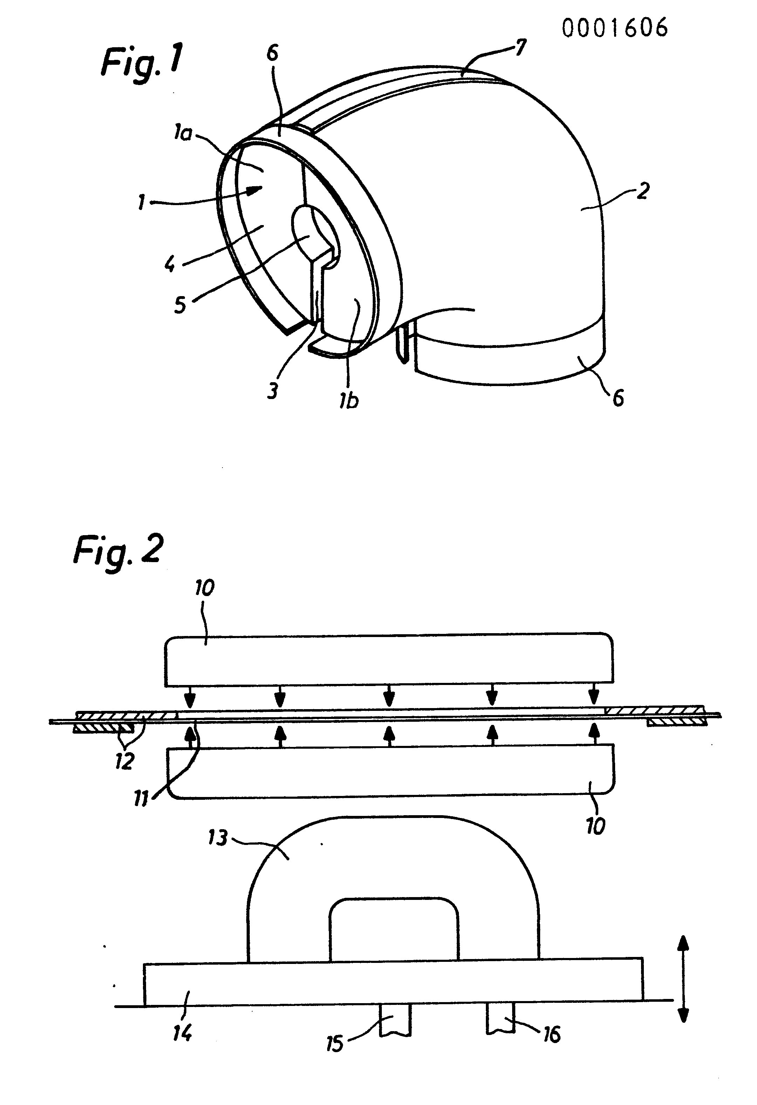

Der Schutzmantel 2 liegt an den Isolierkörper 1 an.
An den Enden des Schutzmantels 2 ist jeweils ein Abschnitt 6
ausgebildet, über den der Schutzmantel der sich anschliessenden Isolierung (nicht dargestellt) geschoben wird und mit diesem verklebt wird. An der Aussenseite des Schutzmantels ist
eine meridionale Sicke 7 vorgesehen, um Platz zu schaffen für
eine eventuell am Isolierkörper 1 auftretende Ungleichmässigkeit, die beim Zusammenfügen der Halbschalen 1a,1b entstehen kann. In Fig. 2 ist schematisch eine Vorrichtung zur Herstellung des Schutzmantels gezeigt. Die Vorrichtung besteht im wesentlichen aus einer Heizvorrichtung 10 zum Erwärmen einer Folie 11, einem Spannrahmen 12 zum Halten der Folie, einem Formwerkzeug 13, einem Tisch 14 auf dem das Formwerkzeug angeordnet ist und einer Vakuum - und Druckluftleitung 15 bzw. 16.

Die Heizvorrichtung 10 ist so angeordnet, dass sie zum Aufheizen oberhalb und/oder unterhalb der Folie in Stellung gebracht werden kann. Nach dem Aufheizen wird die Heizvorrichtung 10 entfernt und der Tisch 14 mit dem Formwerkzeug 13 gegen die Folie verschoben. Um das Ziehen der Folie zu verbessern, wird über eine nicht dargestellte Leitung die Folie 11 angeblasen, wodurch diese vorgewölbt wird. In diese Wölbung wird das Formwerkzeug eingefahren bis der Tisch 14 am Spannrahmen 12 anliegt. Danach wird in dem zwischen Folie und Formwerkzeug entstandenen Raum ein Vakuum erzeugt, wodurch sich die Folie 11 an das Formwerkzeug anlegt. Nachdem Erkalten der Folie wird der Tisch 4 abgesenkt.

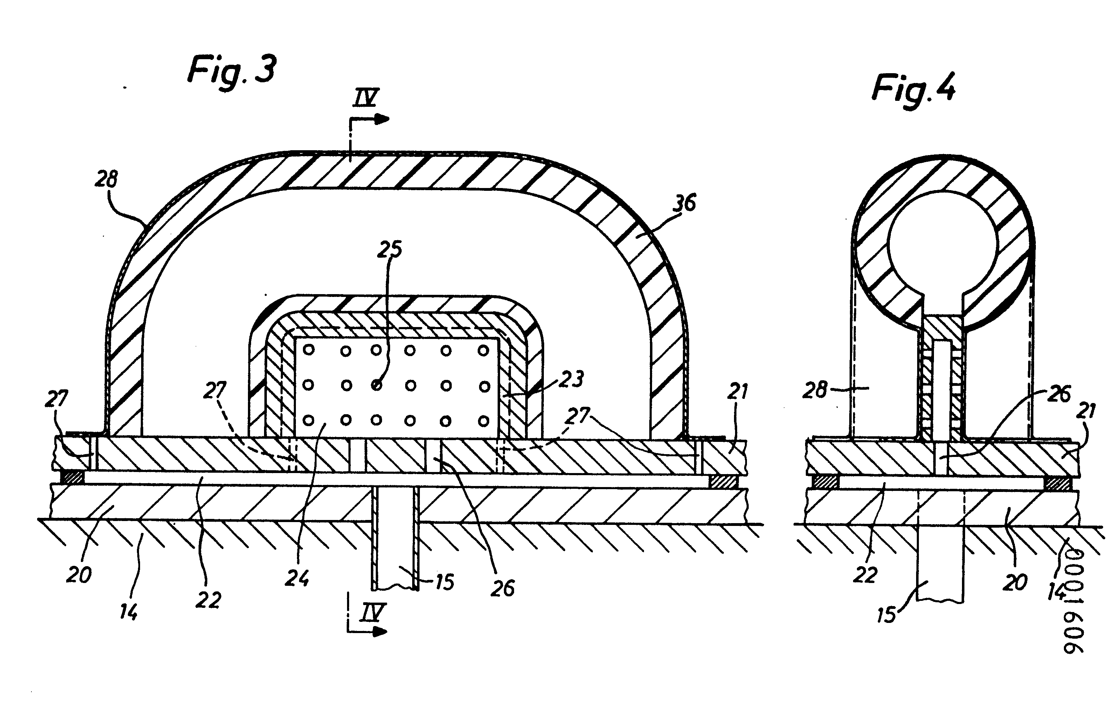

Die Fig. 3,4 und 5,6 zeigen zwei Ausführungsbeispiele eines Formwerkzeuges, die in der Vorrichtung nach Fig. 2 verwendet werden können. Beide Ausführungsbeispiele haben sogenannte verlorene Formen, d.h. für jeden Tiefziehvorgang wird eine neue Form verwendet oder aufgeblasen.

Nachfolgend werden die einzelnen Formwerkzeuge einzeln erläutert, wobei gleiche Bezugszahlen gleiche Teile bezeichnen.

Das in den Fig. 3 und 4 dargestellte Formwerkzeug weist eine Grundplatte 20 auf, die am Tisch 14 befestigt ist. Ueber der Grundplatte 20 ist eine Formplatte 21 angeordnet. Zwischen Grundplatte 20 und Formplatte 21 ist ein Hobelraum 22 vorgesehen, in den die Vakuumleitung 15 mündet. An der Oberseite der Formplatte 21 ist ein Halteorgan 23 angeordnet. Das Halteorgan 23 ist quaderförmig und an einer Längsseite fest mit der Formplatte 21 verbunden. Im halteorgan 23 ist eine rechteckförmige Ausnehmung 24 und sind Löcher 25 vorgesehen, die in der Ausnehmung münden. In der Formplatte 21 sind Bohrungen 26 vorgesehen, die die Ausnehmung 24 mit dem Hohlraum 22 unterhalb der Formplatte 21 verbinden.

Auf das Halteorgan 23 ist eine Form aufgesteckt. Die Form ist ein aus Halbschalen gebildeter Isolierkörper 36. Die Halbschalen sind als einstückige an den die Stirnseiten des Isolierkörpers bildenden Enden verbundene Formstücke ausgebildet, die an den äusseren Stossflächen miteinander verklebt sind. Der Isolierkörper 36 liegt mit den anderen Stirnseiten auf der Formplatte 21 auf und wird durch das Halteorgan 23, welches in den Schlitz im Isolierkörper 36 hineinragt, gegen seitliches verschieben gesichert.

In der Grundplatte 21 sind ferner Löcher 27 vorgesehen, die in einem Kreisbogen neben dem Halteteil 23 angeordnet sind. Der Radius des Kreisbogens ist etwas grösser als der Radius der kreisförmigen auf der Grundplatte 21 aufliegenden Stirnfläche des Isolierkörpers 36. Die Löcher 27 münden in den Hohlraum 22, der mit der Vakuumleitung 15 verbunden ist.

Um einen Schutzmantel für den Isolierkörper herzustellen, wir das vorstehend beschriebene Formwerkzeug in die Vorrichtung nach Fig. 2 eingesetzt. Nach dem Tiefziehen der Folie, wie es im Zusammenhang mit Fig. 2 beschrieben ist, wird der Isolierkörper 36 mit dem daran anliegenden Schutzmantel 28 von der Grundplatte 21 abgehoben. Anschliessend wird ein neuer Isolierkörper 36 auf die Grundplatte 21 aufgesetzt und der Tiefziehvorgang wird von neuem gestartet.

Wie bereits erwähnt, ist der Isolierkörper 36 aus Halbschalen gebildet, die aus zwei an den Stirnseiten miteinander verbundenen Viertelbögen bestehen. Der Isolierkörper 36 und der daran anliegende Schutzmantel 28 werden nun durch geeignetes Verfahren voneinander getrennt, so dass zwei Viertelbögen entstehen, von denen einer in Fig. 1 dargestellt ist.

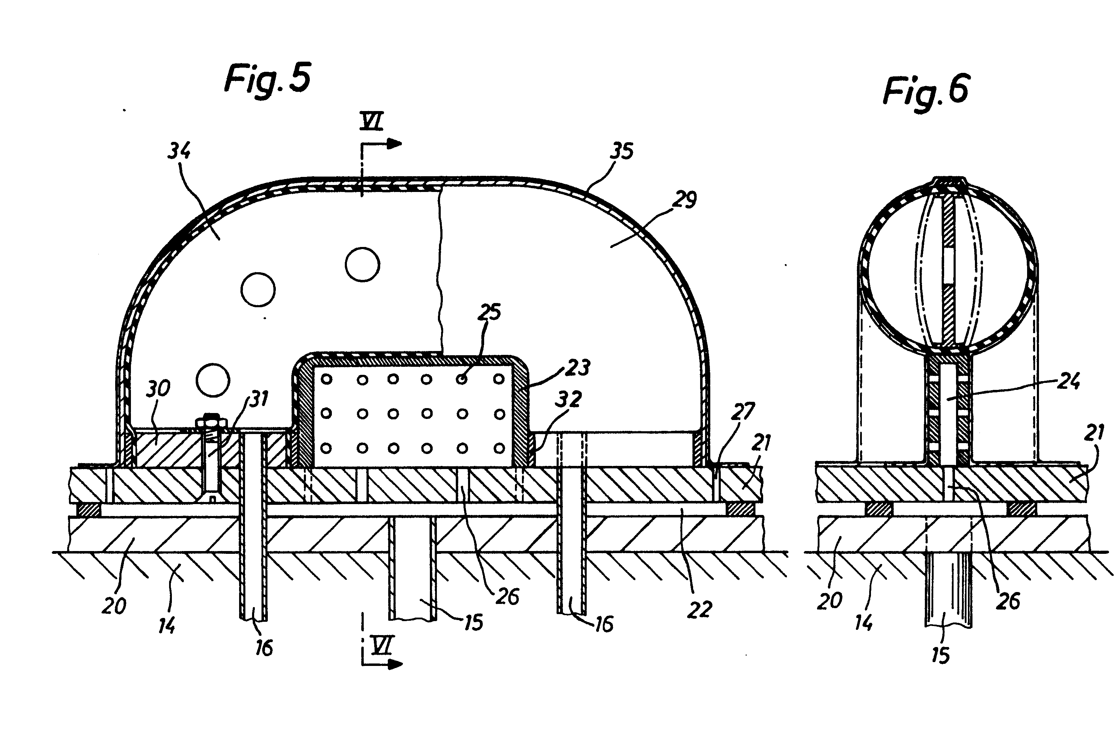

In den Fig. 5 und 6 ist ein anderes Ausführungsbeispiel eines Formwerkzeuges dargestellt. Das Formwerkzeug weist eine Grundplatte 20 auf, die am Tisch 14 befestigt ist. Ueber der Grundplatte 20 ist eine Formplatte 21 angeordnet. Zwischen Grundplatte 20 und Formplatte 21 ist ein Hohlraum 22 vorgesehen, in den die Vakuumleitung 15 mündet.

An der Oberseite der Formplatte 21 ist die Form befestigt, die aus einem schlauchförmigen, elastisch verformbaren Teil 29 besteht. Der Teil 29 ist an den offenen Enden durch eine Halteeinrichtung bestehend aus einer runden Scheibe 30, die an der Frontplatte 21, z.B. durch Schrauben 31 gehalten ist, und einem Haltering 32, zwischen dessen Innenfläche und der Aussenfläche der Scheibe 30 der schlauchförmige Teil 29 geklemmt ist, gehalten. Innerhalb des schlauchförmigen Teiles 29 ist ein Stützorgan 34 vorgesehen, welches an den Scheiben 30 befestigt ist. In den an den Scheiben 30 befestigten schlauchförmigen Teil 29 mündet jeweils eine Druckleitung 16. Der schlauchförmige Teil 29 ist aufblasbar und hat im aufgeblasenen Zustand die Form eines Isolierkörpers 36 analog zu Fig. 3 und 4.

An der Oberseite der Formplatte 21 ist ein quaderförmiges Teil zwischen den Schläuchen angeordnet, welcher analog wie das Halteorgan 23 in Fig. 3 ausgebildet und befestigt ist. Der Teil 23 hat eine rechteckförmige Ausnehmung 24 und ist mit Löchern 25 versehen, die in die Ausnehmung 24 münden. Die rechteckförmige Ausnehmung 24 ist über die in der Formplatte 21 vorgesehenen Löcher 26 mit dem Hohlraum 22 unterhalb der Formplatte 21 verbunden.

In der Formplatte 21 sind ferner in den Hohlraum 22 mündende Löcher 27 vorgesehen, die in einem Abstand von der Halteeinrichtung für den Schlauch auf einem Kreisbogen liegend angeordnet sind.

Wird dieses Formwerkzeug in die in Fig. 2 dargestelle Vorrichtung eingesetzt, so kann damit ein Schutzmantel für einen Isolierkörper gezogen werden, dessen äussere Form dem aufgeblasenen, schlauchförmigen Teil 29 entspricht.

Bevor der Tiefziehvorgang beginnt, wird der schlauchförmige Teil 29 über die Druckleitung 16 aufgeblasen. Der Druck in der Leitung 16 beträgt etwa 3 atü, um dem schlauchförmigen Teil 29 im aufgeblasenen Zustand eine gewisse Formbeständigkeit zu verleihen. Der Tiefziehvorgang wird mit dem aufgeblasenen Teil 29, in der in Zusammenhang mit Fig. 2 beschriebenen Weise durchgeführt, um einen Schutzmantel herzustellen. Nach dem Tiefziehvorgang wird der Druck im schlauchförmigen Teil 29 vermindert, wobei der Teil 29 etwa die in Fig. 6 mittels strichpunktierten Linien dargestellte Form annimmt. Danach kann der Schutzmantel vom schlauchförmigen Teil 29 abgezogen werden. Danach wird der Schutzmantel mechanisch bearbeitet, so dass zwei Viertelbögen entstehen, von denen einer in Fig. 1 dargestellt ist.

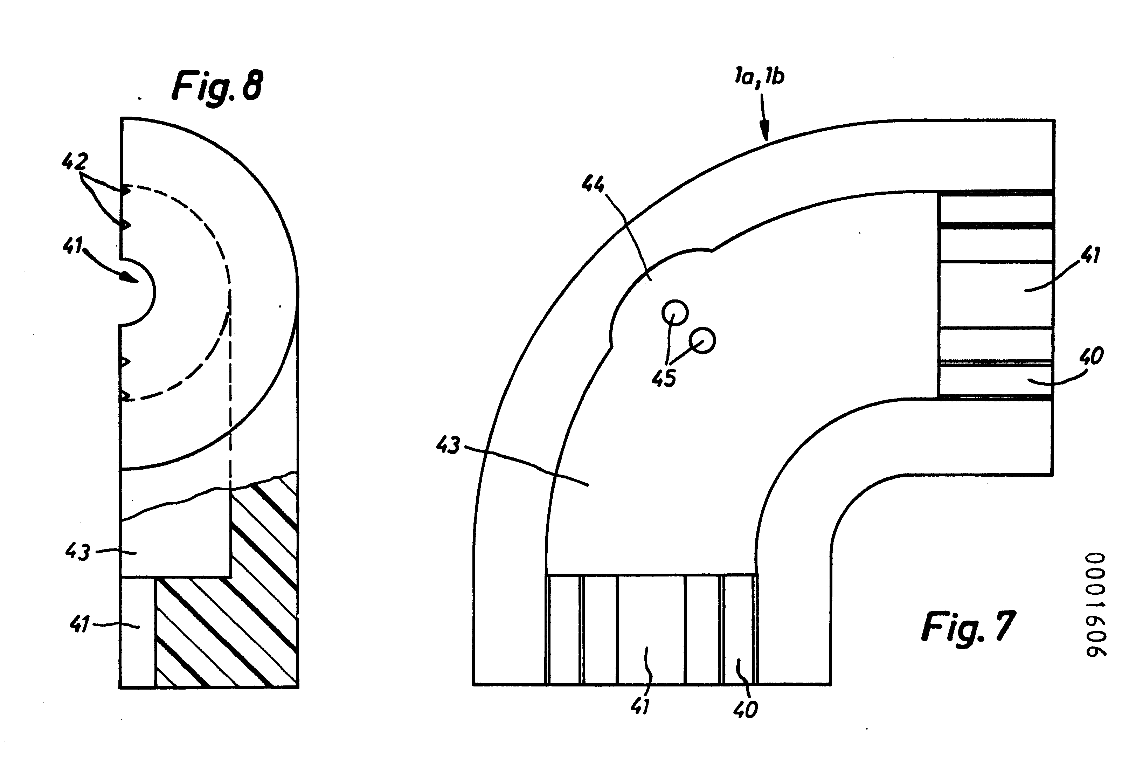

Die Fig. 7 und 8 zeigen ein Ausführungsbeispiel der erfindungsgemässen Halbschale.

Die Halbschale 1a,1b hat die Form eines Viertelbogens und einen halbrunden Querschnitt. In den Abschnitten 40 an den Enden der Halbschale sind Ausschnitte 41 mit halbrundem Querschnitt ausgebildet. In dem Abschnitt 40 sind ferner Rillen 42 vorgesehen, die von dem Ausschnitt 44 und untereinander beabstandet und parallel zueinander ausgebildet sind. Diese Rillen 42 dienen als Markierungen, falls die Halbschale an ein Rohr anzupassen ist, der vom ursprünglich vorgesehenen Ausschnitt nicht erfassbar ist. Zwischen diesen Abschnitten erstreckt sich eine gekrümmte Ausnehmung, die ebenfalls einen halbrunden Querschnitt hat. Im Mittelbereich der Ausnehmung 43 ist eine Ausbuchtung 44 ausgebildet, die in den äusseren Wandteil der Halbschale ragt. In der Ausnehmung 43 sind zwei zylindrische Vorsprünge 45 vorgesehen, die lotrecht von der Oberfläche der Ausnehmung 44 abstehen. Die Vorsprünge sind einstückig mit der Halbschale 1a,1b ausgebildet. Die Vorsprünge 45 dienen zur Abstützung des in der Ausnehmung liegenden Krümmers. Dabei werden die Vorsprünge 45

0001606

bei der Montage der Halbschalen 1a,1b jeweils entsprechend
gekürzt oder gänzlich entfernt.

- 1 -

P a t e n t a n s p r ü c h e
------------------------------------

1. Isolierung für einen Rohrbogen gegen Kälte, Schall und Wärme, bestehend aus zwei am Rohrbogen anlegbare, formgleiche Halbschalen, die einen rohrförmigen Isolierkörper bilden und einem die Aussenseite der zusammengefügten Halbschalen abdeckenden Schutzmantel, dadurch gekennzeichnet, dass jede Halbschale (1a,1b) an den Enden jeweils einen mit einem Ausschnitt (41) versehenen Abschnitt (40) und eine gekrümmte Ausnehmung (43) mit halbrundem Querschnitt, die sich zwischen den Abschnitten (40) erstreckt, sowie eine Ausbuchtung (44) aufweist, die im Mittelabschnitt der Ausnehmung in den äusseren Wandbereich der Halbschale (1a,1b) hineinragt, und dass der Schutzmantel (2) als eine auf der Aussenseite der zusammengefügten Halbschalen (1a,1b) anliegende, am inneren Kreisbogen getrennte Folie ausgebildet ist.

2. Isolierring nach Anspruch 1, dadurch gekennzeichnet, dass der im Abschnitt am Ende der Halbschalen vorgesehene Ausschnitt (41) halbrund ausgebildet ist und mit dem zu isolierenden Rohrbogen in Anlage bringbar ist, und dass im Abschnitt (40) Rillen (42 ) vorhanden sind, die vom Ausschnitt (41) und untereinander beabstandet und parallel zueinander liegend ausgebildet sind, die als Einschnittrille zur Vergrösserung des Ausschnittes dienen.

3. Isolierring nach Anspruch 1, dadurch gekennzeichnet, dass die Halbschale (1a,1b) mit mindestens einem Vorsprung (45) versehen ist, der von der Oberfläche einer der Ausnehmungen (43) absteht, um die Halbschale (1a,1b) gegen den zu isolierenden Rohrbogen abzustützen.

4. Isolierring nach Ansprüchen 1 bis 3, dadurch gekennzeichnet, dass die Halbschale (1a,1b) aus Polyurethan-Integral-Schaumstoff hergestellt ist.

5. Isolierring nach den Ansprüchen 1 bis 4, dadurch gekennzeichnet, dass die Halbschale (1a,1b) eine geschlossene Aussenhaut aufweist, um das Eindringen von Wasser zu verhindern.

6. Isolierung nach den Ansprüchen 1-5, dadurch gekennzeichnet, dass die den Isolierkörper (1) bildenden Halbschalen an den äusseren Stossflächen miteinander verklebt sind, und dass der Isolierkörper ein Viertelbogen ist.

7. Verfahren zur Herstellung einer Isolierung nach den Ansprüchen 1-6, dadurch gekennzeichnet, dass die den Isolierkörper (1)bildenden Halbschalen (1a,1b) durch Aufschäumen oder durch mechanische Bearbeitung hergestellt werden, und dass der Schutzmantel (2) durch Tiefziehen einer Folie (11) mit einer verlorenen Form erzeugt wird, wobei die Folie (11) erwärmt wird, die Folie (11) über die Form gezogen wird, um den Schutzmantel vorzuformen, zwischen dem vorgeformten Schutzmantel und der Form ein Unterdruck erzeugt wird, um den Schutzmantel auszubilden, und dass die Form zusammen mit dem Schutzmantel bearbeitet wird, um die Isolierung herzustellen.

8. Verfahren zur Herstellung einer Isolierung nach den Ansprüchen 1-6, dadurch gekennzeichnet, dass die den Isolierkörper (1) bildenden Halbschalen (1a,1b) durch Aufschäumen hergestellt oder durch mechanische Bearbeitung hergestellt wird, dass der Schutzmantel (2) durch Tiefziehen einer Folie (11) mit einer verlorenen Form erzeugt wird, wobei die Folie (11) erwärmt wird, die Form mit einem Ueberdruck beaufschlagt wird, um die Form auszubilden, die Folie über die Form gezogen wird, um den Schutzmantel (2) vorzuformen, zwischen dem vorgeformten Schutzmantel und der mit Ueberdruck beaufschlagten Form ein Unterdruck erzeugt wird, um den Schutzmantel auszubilden, und der Ueberdruck in der Form herabgesetzt wird, um den Schutzmantel abzuziehen, und dass der Schutzmantel von Hand auf die den Isolierkörper bildenden Halbschalen aufgezogen wird.

9. Verfahren nach Anspruch 7 oder 8, dadurch gekennzeichnet, dass die Halbschalen (1a,1b) aus einer Komponentenmenge von 30 bis 80 kg/m$^3$ aufgeschäumt wird.

10. Vorrichtung zur Durchführung des Verfahrens nach Anspruch 7, mit einer Heizvorrichtung (10) zum Erwärmen der Folie (11), einem Spannrahmen (12) zum Halten der Folie, einer Form (13), einem Tisch (14), auf dem die Form angeordnet ist und einer Vakuumleitung, dadurch gekennzeichnet, dass die Form (13) ein aus den Halbschalen gebildeter Isolierkörper (36) ist, und dass am Tisch (14) eine Formplatte (21) mit einem Halteorgan (23) für den Isolierkörper (36), auf welchem der Isolierkörper (36) aufgesteckt ist, vorgesehen ist, wobei in der Formplatte (21) und im Halteorgan Löcher (25,27) vorgesehen sind, die mit der Vakuumleitung (15) in Verbindung stehen, um den Unterdruck zu erzeugen.

11. Vorrichtung nach Anspruch 10, dadurch gekennzeichnet, dass der Isolierkörper (36) aus zwei formgleichen aus jeweils zwei an einem Ende miteinander verbundenen Halbschalen besteht, welche an den äusseren Stossflächen miteinander verklebt sind, und dass der Isolierkörper (36) aus Polyurethan-Integralschaum besteht.

12. Vorrichtung zur Durchführung des Verfahrens nach Anspruch 8 mit einer Heizvorrichtung (10) zum Erwärmen der Folie (11), einem Spannrahmen (12) zum Halten der Folie, einer Form (13), einem Tisch (14) auf dem die Form angeordnet ist und einer Vakuum- und Druckleitung (15,16), dadurch gekennzeichnet, dass die Form ein schlauchförmiger aufblasbarer Teil (29) aus einem elastisch verformbaren Material ist, und dass am Tisch (14) eine Formplatte (21) vorgesehen ist, auf welcher der schlauchförmige Teil (29) an seinen Enden gehalten ist und auf welcher ein quaderförmiges Organ (23) zwischen den Schlauchenden angeordnet ist, wobei der schlauchförmige Teil (29) mit der Druckluftleitung (16) in Verbindung stehen, um den aufblasbaren Teil (29) mit dem Ueberdruck zu beaufschlagen und wobei in der Formplatte (21) und in dem Organ (23) eine Mehrzahl von Löchern (25,27) vorgesehen sind, die mit der Vakuumleitung (15) in Verbindung stehen, um den Unterdruck zu erzeugen.

13. Vorrichtung nach Anspruch 12, dadurch gekennzeichnet, dass ein Stützteil (34 und 35) innerhalb des schlauchförmigen Teiles (29) angeordnet ist.

14. Vorrichtung nach Anspruch 12, dadurch gekennzeichnet, dass der aufblasbare Teil (29) im aufgeblasenen Zustand in Form zweier an einer Stirnseite miteinander verbundener Viertelbögen hat.

15. Vorrichtung nach Anspruch 12, dadurch gekennzeichnet, dass der aufblasbare Abschnitt (29) aus Gummi besteht.

**Fig. 1**

**Fig. 2**

Fig.3

Fig.4

Fig.5

Fig.6

0001606

Fig. 7

Fig.8

0001606

**Europäisches Patentamt**

# EUROPÄISCHER RECHERCHENBERICHT

Nummer der Anmeldung

EP 78 101 101.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| − | US - A - 3 598 157 (OWENS-CORNING) <br> * Spalte 1, Zeile 46 bis Spalte 2, Zeile 33; Spalte 3, Zeilen 21 bis 59; Fig. 1, 2; Positionen 18, 20 * <br><br>-- | 1-6, 9,11 |
| − | DE - A - 1 454 979 (R. BOSCH) <br> * Fig. 1 bis 7 * <br><br>-- | 7,10 |
| D | CH - A - 542 397 (G. MÜLLENDER) <br> * Spalte 1, Zeilen 44 bis 49 * <br><br>-- | 1 |
| A | DE - A - 2 322 314 (E. KEUTNER) <br><br>-- | |
| A | US - A - 3 960 180 (ANDERSSONS) <br><br>-- | |
| A | US - A - 1 771 134 (C.S. MORGAN) <br><br>-- | |
| D | DE - A - 2 353 308 (E. KEUTNER) <br><br>-- | |
| D | CH - A - 564 723 (A. SCHIBIG) <br><br>---- | |

**KLASSIFIKATION DER ANMELDUNG (Int.Cl.²)**

F 16 L 59/16
B 29 C 17/03

**RECHERCHIERTE SACHGEBIETE (Int. Cl.²)**

B 29 C 17/03
B 29 C 27/14
B 29 D 27/00
F 16 L 59/05
F 16 L 59/14
F 16 L 59/16

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. | |
|---|---|---|
| **Recherchenort** <br> Berlin | **Abschlußdatum der Recherche** <br> 21-12-1978 | **Prüfer** <br> SCHLABBACH |

EPA form 1503.1 06.78